# EUROPÄISCHE PATENTANMELDUNG

(11) **EP 1 391 348 A2**
(43) Veröffentlichungstag der Anmeldung: **25.02.2004**
(21) Anmeldenummer: 03018846.0
(22) Anmeldetag: 19.08.2003
(51) Int. Cl.: B60Q 1/26, B60R 1/12, F21V 8/00

(54) **Leuchtkörper-Einsatz zum nachträglichen Einbau in Standard-Fahrzeugseitenspiegel**

(30) Priorität: 21.08.2002 DE 10238264; 08.08.2003 DE 10336615
(71) Anmelder: Mayr Tuning GmbH, 86669 Ludwigsmoos (DE)
(72) Erfinder: Mayr, Gotthard, 86669 Ludwigsmoos (DE)
(74) Vertreter: Winter, Brandl, Fürniss, Hübner, Röss, Kaiser, Polte, Partnerschaft

(57) **Zusammenfassung**

Beschrieben wird ein Leuchtkörper-Einsatz (400) zum nachträglichen Einbau in serienmäßige Standard-Fahrzeugseitenspiegel (2), der als Vollkörper ein Spiegelgehäuse (30) eines Fahrzeugseitenspiegels (2) volumenmäßig vervollständigt und zur Außenseite hin abschließt. Der Leuchtkörper-Einsatz (400) hat die Form einer einstückigen Schale, die formschlüssig in eine nachträglich in einen durchgehenden Wandabschnitt des Spiegelgehäuses (30; 130) eingebrachte Aussparung (410) einsetzbar ist und zumindest ein Leuchtmittel (420) aufweist. Beschrieben wird ferner ein Bausatz zum Nachrüsten eines serienmäßigen Standard-Fahrzeugseitenspiegels mit einem derartigen Blinkleuchtkörper, sowie ein Verfahren zum Nachrüsten serienmäßiger Seitenspiegel (2) bei gängigen Kfz-Typen, deren Gehäuse (30) nicht von vorne herein zur Aufnahme eines Blinklichts vorgesehen ist, zu Seitenspiegel-Blinker-Einheiten.

## Beschreibung

Die Erfindung betrifft einen Leuchtkörper-Einsatz zum nachträglichen Einbau in Standard-Fahrzeugseitenspiegel und einen Bausatz dafür.

Schon seit langem ist es prinzipiell bekannt, Kfz mit in den Seitenspiegeln integrierten Blinkleuchten auszurüsten, um die Erkennbarkeit von Abbiege- bzw. Spurwechsel- oder Warnsignalen zu verbessern. Beispielhaft sei dazu die englische Schrift GB 2 266 870 A genannt.

Im Zuge der Entwicklung wurde dabei deutlich, dass das Blinkersignal insbesondere für nachfolgende Verkehrsteilnehmer wichtig ist. Der Gesetzgeber hat daher Richtlinien erlassen, nach denen in den Seitenspiegeln von Kraftfahrzeugen befindliche Blinkleuchten in einem gegen die Fahrzeuglängsachse entgegen der Fahrtrichtung um 30-85° nach außen geneigten Winkelbereich Licht abstrahlen müssen. Auch bezüglich der Lichtstärke im genannten Winkelbereich bestehen gesetzliche Regelungen. Daneben sollen derartige Blinker auch nach vorne Licht abstrahlen, wobei dafür keine Mindestlichtmenge festgelegt ist.

Mehr und mehr gehen namhafte Autobauer dazu über, ihre Autos mit derartigen in den Seitenspiegel integrierten Blinkern auszurüsten.

So weist beispielsweise die in der Gebrauchsmusterschrift DE 297 02 746 U1 vorgeschlagen Seitenspiegel-Blinker-Einheit am fahrzeugzugewandten Ende der Einheit eine Lichtquelle auf, deren Licht mittels eines Lichtleiters zum fahrzeugabgewandten Ende der Einheit gesendet wird, um so den erforderlichen Winkelbereich auszuleuchten, während gleichzeitig der am fahrzeugzugewandten Ende der Seitenspiegel-Blinker-Einheit verhältnismäßig reichlich vorhandene Raum zum Unterbringen der Lichtquelle genutzt wird.

Eine weitere Seitenspiegel-Blinker-Einheit, mit der die gesetzlich vorgeschriebene Abstrahlungscharakteristik erzielt wird, wird in der deutschen Patentanmeldung DE 198 28 253 A1 beschrieben. Im Gehäuse des dortigen Kfz-Seitenspiegels ist eine Lichtquelle vorgesehen, die Licht in den entgegen der Fahrtrichtung liegenden Bereich abstrahlt. Als zusätzliche Lichtquelle ist auf der entgegenkommenden Fahrzeugen zugewandten Seite der Seitenspiegel-Blinker-Einheit eine Leuchtfolie aufgebracht, so dass die seitlich nach hinten abstrahlende Lcihtquelle klein dimensioniert werden kann, beispielsweise in Form einer LED.

Des Weiteren zeigt die europäische Offenlegungsschrift EP 997 346 A1 eine Seitenspiegel-Blinker-Einheit, bei der im Gehäuse der Einheit auf der fahrzeugabgewandten Seite getrennte Lichtquellen einerseits in den vor dem Fahrzeug liegenden Bereich ausstrahlen und andererseits in den entgegen der Fahrtrichtung um bis zu 60° nach außen geneigten Winkelbereich. Das Licht der entgegen der Fahrtrichtung strahlenden Blinkleuchte wird dabei mittels eines elipsoidischen Reflektors in den gewünschten Winkelbereich gelenkt.

Auch die weitere Schrift US 2001/0026455 A1 zeigt einen Blinker-Einsatz, der in ein speziell angepasstes Seitenspiegelgehäuse einbaubar ist. Dabei kann in eine Aufnahme mit entsprechenden Halterungen eines modifizierten Seitenspiegelgehäuses wahlweise eine bloße Abdeckung oder eine fest verbundene Einheit aus einem Dekorativschalenelement und dem Blinkereinsatz eingesetzt werden.

Die in den genannten Schriften gezeigten Seitenspiegel sind für die Erstausrüstung von PKWs gedacht. die Seitenspiegel weisen daher jeweils speziell gestaltete Seitenspiegelgehäuse auf, in welche mehr oder minder komplizierte, aus mehreren Einzelteilen bestehende Blinksignalgeberanordnungen eingebaut sind. Anders ausgedrückt, die dort gezeigten Blinker-Baugruppen erfordern jeweils ein speziell angepasstes Spiegelgehäuse.

Es besteht nun auch bei Besitzern älterer oder preisgünstigerer Autos das Bedürfnis, ihren Wagen mit in die Seitenspiegel integrierten Blinkern aufzuwerten. Diese bis heute überwältigende Mehrheit an Fahrzeugen haben serienmäßige Standard-Fahrzeugseitenspiegel, die nicht zum nachträglichen Einbau eines Blinkers vorgerüstet sind. Das Spiegel-Gehäuse besteht dabei in gängiger Weise im wesentlichen aus einer Schale, die das Spiegelglas und die dahinterliegende Mechanik/Elektrik einfasst. Es versteht sich dabei von selbst, dass sich die nachgerüsteten Seitenspiegel designmäßig ins Bild des Fahrzeugs einfügen müssen.

Hiervon ausgehend ist es Aufgabe der Erfindung, ein Verfahren zu schaffen, mit dem das Nachrüsten bestehender, serienmäßiger Seitenspiegel gängiger Kfz-Typen, deren Gehäuse nicht von vorne herein zur Aufnahme eines Blinklichts vorgesehen ist, zu Seitenspiegel-Blinker-Einheiten auf einfache Weise und kostengünstig zu ermöglichen, sowie jeweils einen dafür geeigneten Leuchtkörpereinsatz und Bausatz zu schaffen.

Diese Aufgabe wird hinsichtlich des Leuchtkörpereinsatzes durch die Merkmale des Anspruchs 1 gelöst, hinsichtlich des Verfahrens durch die Merkmale des Anspruchs 29 und hinsichtlich des Bausatzes durch die Merkmale des Anspruchs 25.

In ihrer Form vorgegebene, serienmäßig bei gängigen Kfz-Typen eingesetzte Standard-Seitenspiegel weisen typischerweise ein Spiegelgehäuse auf, das nicht von vorne herein zur Aufnahme eines Blinklichts vorgesehen ist, und als durchgängige Schale ausgeförmt ist, welche einen Spielgelinnenraum mehrseitig umschließt, in dem das Spiegelglas und eine eventuell vorgesehene Elektrik und/oder Mechanik zur Verstellung und/oder Heizung des Spiegelglases untergebracht ist.

Mit dem erfindungsgemäßen Verfahren können derartige Standard-Seitenspiegel bestehender Alt-PKWs auf einfache und kostengünstige Weise und unter geringem Zeitaufwand zu Seitenspiegel-Blinker-Einheiten nachgerüstet werden.

Erfindungsgemäß ist ferner ein als separate Einheit ausgeführter Leuchtkörper-Einsatz vorgesehen, der in bestehende Fahrzeug-Seitenspiegel eingebaut werden kann. Der Einsatz schließt die Gehäuseaussparung dabei nach außen hin ab. Wenngleich auch ein Spalt zwischen Einsatz und Gehäuse toleriert werden kann, da auch bestehende Spiegel nicht vollständig wasserdicht abgedichtet sind, ist die Aussparung doch vorzugsweise vollständig abgedichtet.

Es gelingt damit, einen robust aufgebauten Einsatz zu schaffen, mit dem die Blinkerfunktion bei einem Kfz mit bestehenden Standard-Seitenspiegeln mit möglichst geringem Umbauaufwand nachgerüstet werden kann, ohne das Design zu beeinträchtigen.

Es gelingt ferner, die gesetzlich vorgegebene Abstrahl-Winkelbereich einzuhalten.

Der Leuchtkörper-Einsatz ist dabei einstückig und als Vollkörper ausgeführt und ist dadurch robust und leicht handhabbar im Aufbau und beim Einbau. Der Leuchtköper-Einsatz kann dabei nahezu vollständig , d.h. bis auf Leuchtmittel und Lichtabdichtung zum Innenraum hin, aus transparentem Kunststoff bestehen.

Vorteilhaft weist der erfindungsgemäße Einsatz dabei am Frontende eine in Fahrtrichtung weisende Erhöhung auf, mit der er ins Spiegelgehäuseinnere vorsteht. Dort steht somit Bauraum im Einsatz zur Verfügung, um ein Leuchtmittel aufzunehmen. Das Leuchtmittel strahlt dabei durch den Körper des Einsatzes hindurch in den gewünschten Abstrahlbereich, der seitlich nach hinten gerichtetet ist. Daneben ist das Blinkersignal aber auch von entgegenkommenden Verkehrsteilnehmern wahrnehmbar.

Vorteilhaft hat der Leuchtkörper-Einsatz im eingebauten Zustand zudem an seiner dem Fahrzeugheck zugewandten Seite eine Erhöhung, an der der Leuchtkörper-Einsatz aus dem Seitenspiegelgehäuse hervortritt, um eine zum Fahrzeugheck weisende Leuchtfläche freizulegen. Lediglich an der Erhöhung, weicht die Form des Spiegelgehäuses bei eingesetztem Leuchtkörper-Einsatz von der Standard-Außenkontur ab. Ansonsten fügt sich der Leuchtkörper-Einsatz nahtlos in das Standard Blinkergehäuse ein bzw. vervollständigt dieses volumenmäßig nach außen hin und schließt es zur Außenseite hin ab. Somit bleiben die aerodynamischen Eigenschaften eines in Serie gefertigten Standardspiegelgehäuses weitgehend erhalten. Auch die Stabilität des Spiegelgehäuses wird nicht beeinträchtigt.

Grundsätzlich ist die Form, die Geometrie und die Einbaulage des Leuchtkörper-Einsatzes nicht konkret beschränkt. Sie wird in Abhängigkeit von der Form des Spiegels, seiner Ausrichtung zum Fahrzeug und dem gewünschten, zu erzielenden Sicherheitseffekt gewählt. Wenn die Außenkontur des Spiegelgehäuses quer zur Fahrzeuglängsache konvex ausgewölbt ist, kann der Leuchtkörper-Einsatz sogar eine mit der Außenkontur des Standard-Fahrzeugseitenspiegels ündige Außenoberfläche haben und trotzdem eine entgegen der Fahrzeuglängsachse weisende Leuchtfläche ausbildent und in das Spiegelgehäuse an einer Stelle eingesetzt ist, an Der Leuchtkörper-Einsatz kann

In der vorteilhaften Ausführungsform nach Anspruch 15 vervollständigt der Leuchtkörper-Einsatz das Spiegelgehäuse volumenmäßig. Im Bereich der Erhöhung, an der der Leuchtkörper-Einsatz aus dem Seitenspiegelgehäuse hervortritt, steht somit Bauraum zur Verfügung, um ein Leuchtmittel aufzunehmen.

In der vorteilhaften Weiterbildung nach Anspruch 5 schließt an die heckseitige Erhöhung bzw. die Leuchtfläche des Blinkleuchten-Einsatzes eine Nase an, die im eingebauten Zustand am heckseitigen Rand der Aussparung des Spiegelgehäuses entgegen der Fahrtrichtung übersteht. Es hat sich gezeigt, dass auf diese Weise der Anteil des von der Lichtquelle des Blinkleuchten-Eindsatzes ausgesandten Lichts, das in den gewünschten Winkelbereich gelenkt wird, erhöht werden kann. Je nach den Brechungs-, Streuungs- und Reflexionseigenschaften u.ä. des Trägermaterials des Blinkleuchten-Einsatzes kann dabei die Formgebung der Nase variiert werden.

Vorteilhaft ist es gemäß Anspruch 6, den Leuchtkörper-Einsatz mit zumindest einer Leuchtdiode (LED) als Leuchtmittel und einem Träger mit einer lichtführenden Schicht aus lichtleitendem Material, vorzugsweise transparentem Kunststoff, auszustatten.

Dabei ist die Leuchtdiode bevorzugt hinter der Leuchtfläche in einer Ausnehmung im Träger angeordnet.

Durch die kleine Baugröße von Leuchtdioden gelingt es auf vorteilhafte Weise, dem Leuchtkörper-Einsatz eine schlanke Form zu geben, so dass er sich ideal in das Spiegelgehäuse einfügt, ohne zuviel Bauraum im Gehäuseinneren zu beanspruchen. LEDs erzeugen darüber hinaus nur geringe Verlustwärme und haben dadurch eine lange Lebensdauer, so dass die Diode wartungsfrei fest eingebaut werden kann, ohne dass ein nachträgliches Austauschen der Diode möglich sein muss.

Um eine Beeinträchtigung des Fahrers auszuschließen, ist in der vorteilhaften Weiterbildung gemäß Anspruch 8 darüber hinaus eine Abdichtung vorgesehen, welche die Ausnehmung, in der die Leuchtdiode sitzt gegen die zum Spiegelgehäuseinneren, also zum Fahrer hin weisende Seite, abdichtet. Vorteilhaft ist die Abdichtung reflektierend, so dass die gesamte Abstrahlung in die gewünschte Richtung geleitet wird.

Die reflektierende Abdichtung kann dabei als einzelnes Reflektor-Bauteil vorgesehen sein. Im Falle mehrerer Leuchtdioden können auch mehrere Reflektoren vorgesehen sein. Alternativ oder zusätzlich dazu kann eine reflektierende Schicht auf die zur Innenseite des Spiegelgehäuses weisende Oberfläche aufgebracht werden. Geeignet dafür sind etwa Lacke, aufgedampfte oder aufgespritzte Schichten.

Vorteilhaft ist die Leuchtdiode mitsamt ihres elekrischen Anschlusses in die Ausnehmung eingesiegelt. Die Versiegelung kann dabei durch ein Vergießen mit Kunststoff, beispielsweise Kunstharz erfolgen. Auf diese Weise ist gewährleistet, dass, selbst wenn Leuchtkörpereinheit und Spiegelgehäuse nicht wasserdicht aneinander anliegen, die gesamte Elektrik des Leuchtkörpereinsatzes hermetisch von sämtlichen Außeneinflüssen abgeschottet ist. Auch ein gewisser Schutz gegen mechanische Fremdeinwirkungen (z.B. Stöße) ist somit gegeben, so dass sich der Leuchtkörpereinsatz sowohl in der Lagerung und beim Transport als auch im eingebauten Zustand als robust gegen Beschädigungen erweist.

Zur Befestigung des Leuchtkörper-Einsatzes im Spiegelgehäuse sind vorteilhaft federnde Nasen an der Außenkontur des Leuchtkörper-Einsatzes vorgesehen, mit denen eine formschlüssige Verbindung hergestellt werden kann. Aber auch ein Einspannen mittels Federelementen oder ein Verschrauben mit dem Spiegelgehäuse wäre denkbar, je nach Form und Material des Spiegelgehäuses, für das der jeweilige Leuchtkörper-Einsatz hergestellt wird.

Zudem wäre ein Einkleben des Leuchtkörpereinsatzes im Stumpfstoß denkbar. Vorteilhaft sind jedoch am Leuchtkörper-Einsatz parallel zur Innenkontur des Spiegelgehäuses Flansche vorgesehen, an denen der Leuchtkörper-Einsatz in das Gehäuse einklebbar ist. Es kann auch ein umlaufender Flansch vorgesehen sein.

Vorteilhafte Weiterbildungen sind Gegenstand der weiteren Unteransprüche. Dabei versteht es sich von selbst, dass die vorstehend genannten und die nachstehend noch zu erläuternden Merkmale nicht nur in der angegebenen Kombination, sondern auch in anderen Kombinationen oder in Alleinstellung sowie in Kombination mit den im Hauptpatent DE 102 382 64 beschriebenen Merkmalen verwendbar sind, ohne den Rahmen der Erfindung zu verlassen.

In den folgenden Figuren werden vorteilhafte Ausführungsformen der Erfindung gezeigt. Es zeigen:

Nachfolgend werden anhand schematischer Zeichnungen bevorzugte Ausführungsformen der Erfindung näher erläutert. Es zeigen:
Fig. 1 eine skizzierte Ansicht eines Standard-Seitenspiegelgehäuses mit einer Ausnehmung zur Aufnahme eines erfindungsgemäßen Leuchtkörper-Einsatzes;
Fig. 2 eine skizzierte Ansicht einer Ausführungsform des erfindungsgemäßen Leuchtkörper-Einsatzes, welcher in das in Fig. 1 dargestellte Spiegelgehäuses passt;
Fig. 3 eine in einer parallel zur Fahrbahn verlaufenden Ebene aufgenommene Schnittansicht eines eingebauten, erfindungsgemäßen Leuchtkörper-Einsatzes in einer weiteren Ausführungsform;
Fig. 4 eine detaillierte Ansicht der Einzelheit E aus Fig. 3;
Fig. 5 eine Schnittansicht eines eingebauten Leuchtkörper-Einsatzes in einer weiteren Ausführungsform;
Fig. 6 eine Schnittansicht eines eingebauten, Leuchtkörper-Einsatzes in einer weiteren Ausführungsform.
Fig. 7 eine vom Fahrzeugheck aus aufgenommene Ansicht eines Standard-Seitenspiegelgehäuses mit nachgerüstetem Leuchtkörper-Einsatz gemäß einer weiteren Ausführungsform;
Fig. 8 eine Schnittansicht des mit Leuchtkörper-Einsatz nachgerüsteten Seitenspiegelgehäuses der Fig. 7 in einer Ebene parallel zur Fahrbahn;
Fig. 9 eine Ansicht, die den Strahlengang des Lichts bei der in Fig. 7 und 8 dargestellten Ausführungsform der Erfindung zeigt.
Fig. 10 eine Detailansicht der in Fig. 8 gezeigten Aufnahme der Leuchtdiode im Leuchtkörper-Einsatz;
Fig. 11 eine weitere Ausführungsform des erfindungsgemäßen Leuchtkörper-Einsatzes.

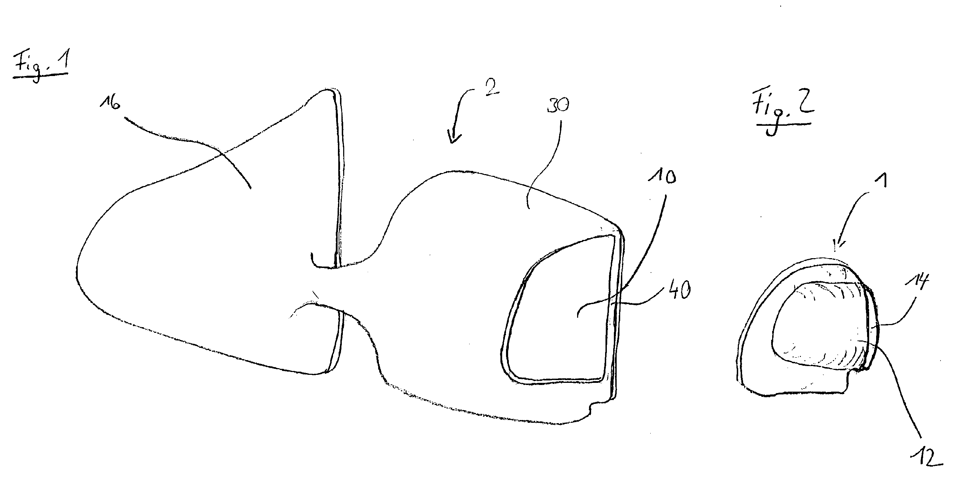

Der in der Fig. 1 grob schematisiert gezeigte Standard-Seitenspiegel 2 kann über eine Gehäusehalterung 16, die am Spiegelfuß angeordnet ist, an einem Pkw befestigt werden. Der Gehäuseinnenraum zur Aufnahme der (nicht gezeigten) Spiegelglasscheibe, einer Verstellmechanik oder -elektrik etc. wird auf der dem Fahrer zugewandten Seite von der Spiegelglasscheibe begrenzt. Auf der in Fahrtrichtung weisenden Seite wölbt sich ein Gehäuse 30 in Form einer geschlossenen Halbschale aus Plastik- bzw. Kunststoff um den Innenraum herum, die zusammen mit einem an der entgegen der Fahrtrichtung gelegenen Seite anschließenden Steg 40 eine Aussparung 10 eingrenzt. Die Oberfläche der Gehäuseschale 30 ist einem Stromlinienkörper angenähert, d.h. als annähernd teil-eliptische oder parabolische Freiformfläche ohne Kanten gehalten. Durch die windschlüpfrige Formgebung erhält der Seitenspiegel 2 eine bauchige Bauform, so dass im Gehäuseinneren ein zum Einbau eines zusätzlichen Blinkleuchten-Einsatzes ausreichendes Platzangebot vorhanden ist.

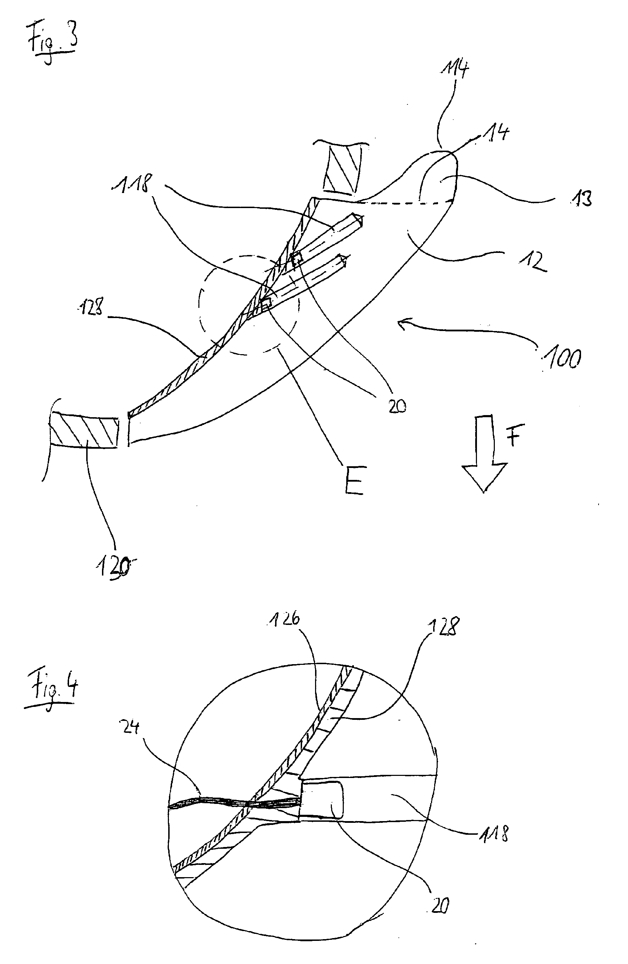

Die von der Gehäuseschale 30 und dem Steg 40 eingeschlossene Aussparung 10 wurde aus der Gehäuseschale 30 herausgefräst und entspricht der Kontur des in Fig. 2 stark schematisiert gezeigten Binkleuchten-Einsatzes 1. Nach Einbau des Binkleuchten-Einsatzes 1 in die Gehäuseschale 30 vervollständigt der Blinkleuchten-Einsatz 1 dabei die durch die Gehäuseschale 30 vorgegebene Form derart, dass das an der Aussparung 10 herausgefräste Stück der Gehäuseschale 30 durch den Blinkleuchten-Einsatz 1 ersetzt wird, wobei die Außenoberfläche des Spiegelgehäuses vor dem Herausfräsen und die Außenoberfläche nach dem Einbau des Blinkleuchten-Einsatzes 1 im wesentlichen deckungsgleich sind. Die Aussparung 10 ist auf allen Seiten von der Gehäuseschale 30 und dem Steg 40, der Teil der Gehäuseschale 30 ist, umschlossen, wobei der eingesetzte Blinkleuchten-Einsatz 1 nach dem Einbau den Seitenspiegel 2 die Gehäuseschale 30 volumenmäßig vervollständigt an der Aussparung 10 und nach außen hin abschließt.

Der Blinkleuchten-Einsatz 1 hat eine von der Dicke der Gehäuseschale 30 ausgehende Dicke, die sich vom der Fahrzeugfront zugewandten Ende aus fließend zu einer Erhöhung 12 verbreitert, die am zum Fahrzeugheck hin weisenden Ende ihre größte Breite erreicht. Innerhalb des Blinkleuchten-Einsatzes 1 ist somit Raum für Lichtquelle(n)und Elektrik vorhanden. Gleichzeitig ist mit der dem Fahrzeugheck zugewandten Seitenfläche der Erhöhung 12 eine Leuchtfläche 14 geschaffen, durch die Licht in den gewünschten Winkelbereich von 5 - 60° zur Querachse des Fahrzeugs in der dem Fahrzeugheck zugewandten Richtung austreten kann.

Bei der dargestellten Ausfünrungsform erfolgt die Befestigung des Blinkleuchten-Einsatzes 1 durch Einkleben. Aber auch andere stoffschlüssige oder aber formschlüssige Verfahren, wie beispielsweise mit Schnapp-, Clips- oder Ferdernasenverschlüsse, einzuhängende Federn u.ä., könnten hierzu eingesetzt werden.

Auch bei den in den weiteren Figuren dargestellten Ausführungsformen ist der Blinkerleuchten-Einsatz allseitig vom Gehäuse 130 umschlossen. Heckseitig (entgegen der Fahrtrichtung F) wird der Blinkleuchten-Einsatz 100; 200 damit vom hinter dem Blinkleuchten-Einsatz 100; 200 liegenden Wandabschnitt des Spiegelgehäuses 130 eingefasst, der als zusätzliche Lichtschutzblende für den Fahrzeuglenker fungiert, der somit auch durch Streulicht nicht vom Verkehrsgeschehen abgelenkt wird.

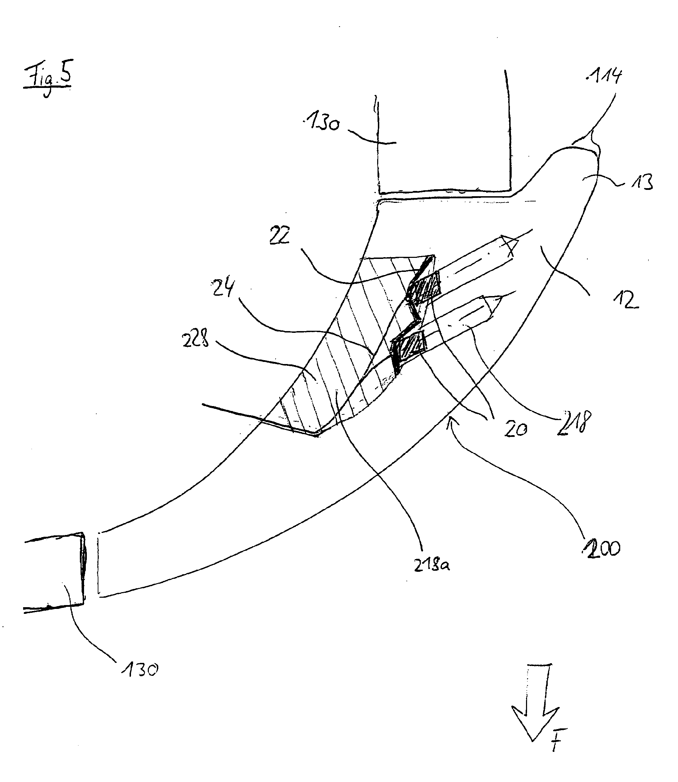

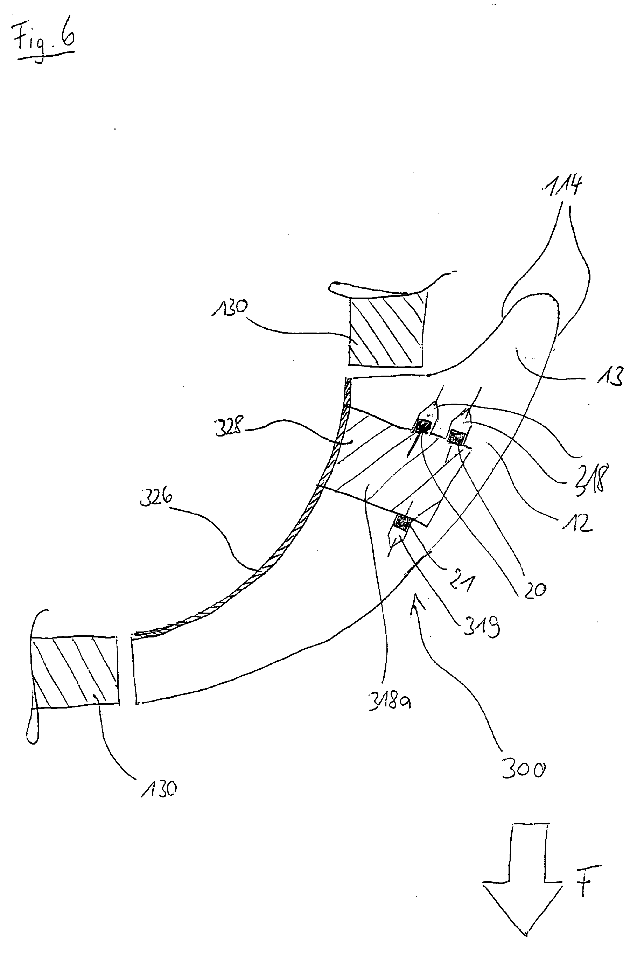

Bei der in den Figuren 3 und 4 gezeigten Ausführungsform der Erfindung ist der Blinkleuten-Einsatz 100 dabei mit zwei Leuchtdioden 20 bestückt, die jeweils in einer Bohrung 118 sitzen, welche von der Innenseite des Einsatzes 100, d.h. der im eingebauten Zustand zum Gehäuseinneren weisenden Seite, aus schräg nach hinten verlaufen und das von den Leuchtdioden ausgesandte Licht zur heckseitigen Leuchtfläche 14, bzw. 114 leiten. Mit gestrichelter Linie ist dabei die Leuchtfläche 14 einer Ausführungsform der Erfindung eingezeichnet, bei der die Leuchtfläche 14 eine in etwa unter 90° zur Fahrtrichtung verlaufende, ebene Oberfläche ist. Bevorzugt ist aber heckseitig am Blinkleuchten-Einsatz 100 eine Nase 13 vorgesehen, deren mit durchgezogener Linie eingezeichnete Oberfläche 114 die Leuchtfläche 114 bildet. Denn unter Ausnutzung der im Trägermaterial (Kunststoff) des Einsatzes 100 stattfindenden Lichtbrechung und -streuung gelingt es so, eine genügende Lichtmenge in den gewünschten Leuchtbereich auszustrahlen, der 5° - 60° gegenüber der Fahrzeugquerachse nach hinten geneigt ist.

Bei der gezeigten Ausführungsform werden zwar zwei Leuchtdioden eingesetzt, je nach Leistung der LEDs wären aber auch der Einsatz von nur einem oder mehrere LEDs denkbar. Dabei kommen blinkersignalfarben leuchtende LEDs zum Einsatz, es wäre aber auch möglich, andersfarbig leuchtende LEDs zu verwenden und die Lichtabstrahlung durch entsprechend angeordnete Farbfilter in Blinkersignal-Orange einzufärben.

Die LEDs 20 sind dabei an der Innenseite des Einsatzes 100 in die Bohrungen 118 eingeschoben und dort in eine Kunststoffmasse 128 eingegossen und somit lagestabil befestigt. Über ein Leiterband 24, das an die LEDs 20 angeschlossen ist, erfolgt die Stromversorgung. Das Leiterband 24 weist dabei fahrzeugseitig geeignete, nicht gezeigte Anschlüsse auf, mit denen es beim Einbau des Leuchtkörper-Einsatzes 100 mit der Fahrzeugelektrik zu verbinden ist.

Je nach Typ des Fahrzeugs kann dabei beispielsweise vorgesehen sein, das Leiterband 24 durch den Spiegelgehäusefuß und die Fahrzeugtüre mit dem Blinksignalgeber zu verbinden. Bei Fahrzeugtypen, die schon eine entsprechende Anschlussmöglichkeit im Spiegelgehäuse aufweisen, reicht es dagegen aus, das Leiterband 24 mit einem passenden Anschlussstecker zu versehen und bis zur Anschlußstelle durchzuführen. Bevorzugt wird das Leiterband dabei innenseitig mit dem Spiegelgehäuse verklebt, um so Lagestabilität zu gewährleisten. Falls schon eine elektrische Verkabelung vorhanden ist, beispielsweise eines im Gehäuse sitzenden Elektromotors zum Spiegelverstellen, könnte auch ein Ersatz der vorhandenen Verkabelung durch ein Leiterband 24 vorgesehen sein, das neben den Adern zur Blinkeransteuerung Adern und Anschlüsse zur Ansteuerung der Spiegelverstell- bzw. Heizmechanismen aufweist.

Wie der Figur 4 zu entnehmen ist, ist die Innenseite des Blinkleuchten-Einsatzes 100 des Weiteren mit einer reflektierenden Lackschicht 126 überzogen, wodurch eine Lichtabstrahlung in Richtung Fahrerkabine zuverlässig verhindert wird und sämtliches Licht zur Außenseite hin reflektiert wird. Eine Lichtabstrahlung erfolgt somit in Fahrtrichtung F als auch seitlich nach außen und schräg nach hinten (entgegen der Fahrtrichtung F).

Insgesamt ergibt sich somit ein Aufbau des Blinkleuchten-Einsatzes 100, der eine kostengünstige und in Massenproduktion durchführbare Fertigung des Blinkleuchten-Einsatzes 100 erlaubt: Nach einem ersten Schritt des Gießens, Spritzgießens oder anderweitigen Formens des Körpers des Blinkleuchten-Einsatzes aus einem geeigneten, möglichst durchscheinenden Kunststoff, beispielsweise Polycarbonat oder Plexiglas (PMMA), in den in einem zweiten Schritt Dioden-Aufnahmebohrungen 118 eingebohrt werden, werden die Dioden-Aufnahmebohrungen 118 mit LEDs bestückt und mit einem Leiterband 24 verkabelt. In einem anschließenden Schritt werden die Dioden mit ihren elektrischen Anschlüssen dann wasserdicht und lagestabil an ihren Positionen in den Einsatz eingegossen bzw. durch Auftrag einer Versiegelungsschicht 128 eingesiegelt. Abschließend wird die Reflektionsschicht 126 auf die Versiegelungsschicht 128 aufgespritzt, aufgedampft oder anderweitig aufgetragen.

Der Einbau des Blinkleuchten-Einsatzes 100 geht somit ebenfalls einfach vonstatten, da der Einsatz einstückig aufgebaut ist und somit nur ein Teil in die im Spiegelgehäuse vorgesehenen Aussparung eingeschoben wird und mit am Blinkleuchten-Einsatz 100 vorgesehenen Verankerungselementen am Spiegelgehäuse 130 befestigt wird. Die Verkabelung (Leiterband 24) wird bis zur entsprechenden Anschlussstelle an die Fahrzeugelektrik geführt.

Die Verkabelung (Leiterband 24), aber auch die Form und die für den Einsatz 100 vorgesehenen Befefstigungselemente sind dabei jeweils an die Serie des Fahrzeugs, bzw. des Seitenspiegels angepasst. Als Verankerungselementen eignen sich insbesondere federnden Nasen, Clips, Klammern oder Spannfedern.

Da die Leuchtelektroden und die elektrischen Anschlüsse wasserdicht eingesiegelt sind, ist es dabei unerheblich, ob - wie in Fig. 3 dargestellt - zwischen Spiegelgehäuse 130 und Blinkleuchten-Einsatz ein Spalt vorhanden ist, durch den Spritzwasser eindringen kann. Auch die weiteren im Spiegelgehäuse vorgesehenen Bauelemente sind wasserunempfindlich, denn schon bei gängigen Fahrzeugseitenspiegeln kann zwischen Gehäuse und Spiegelglas Wasser eindringen. Somit kann der Binkereinsatz 100 innerhalb großzügiger Toleranzen gefertigt werden, was zu einer zusätzlichen Kostensenkung führt.

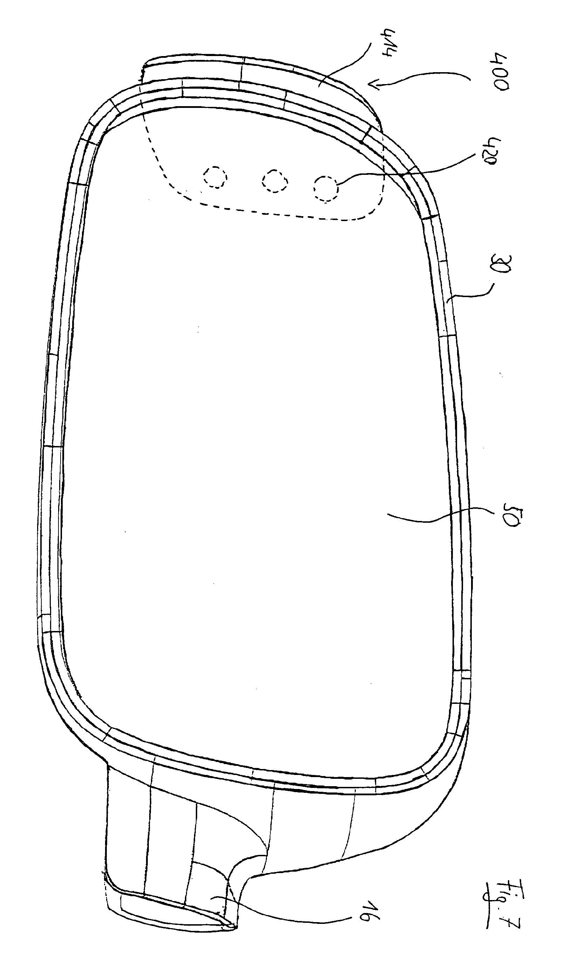

Der in Figur 5 gezeigten Blinkleuchten-Einsatz 200 gemäß einer weiteren Ausführungsform der Erfindung hat größtenteils die selbe Ausgestaltung wie schon der in den Figuren 3 und 4 gezeigte, wobei zwei Leuchtdioden 24 in dafür vorgesehenen Aufnahmen 218 angeordnet sind, welche in Richtung von der Innenseite des Einsatzes aus schräg nach hinten zum Fahrzeugheck hin verlaufen. An der dortigen Leuchtfläche 114, die eine Nase 13 umschliesst, kann das abgestrahlte Licht in den gewünschten Winkelbereich ausgestrahlt werden. Abweichend von der Ausführungsform der Figuren 3 und 4 befindet sich innenseitig hinter den Leuchtdioden 24 aber ein als Einzelteil ausgeführter Reflektor 22, in dem gleichzeitig Halterungen für die LEDs 24 vorgesehen sind. Der Reflektor 22 befindet sich dabei in einer weiteren Ausnehmung 218a, die wiederum mit Siegelmasse 228 ausgegossen ist, wodurch der Reflektor und damit die LEDs fest auf Position verankert sind. Auch bei dieser Ausführungsform der Erfindung sind die LEDs 24 mit ihren elektrischen Anschlüssen im Blinkleuchten-Einsatz 200 somit hermetisch gegen äußere Störeinflüssen wie Spritzwasser oder Steinschlag abgeschottet. Durch den Reflektor wird der Hauptteil des ausgestrahlten Lichts in den seitlich entgegen der Fahrtrichtung F liegenden Winkelbereich hinter der Leuchtfläche F gelenkt. Ein Teil des Streulichts wird aber auch in Fahrtrichtung ausgestrahlt, so dass das Blinksignal auch von entgegenkommenden Verkehrsteilnehmern wahrgenommen werden kann.

Der in Fig. 5 gezeigte Blinkleuchten-Einsatz 200 lässt sich somit im wesentlichen mit dem gleichen Herstellungsverfahren wie der in den Figuren 3 und 4 gezeigte Blinkleuchten-Einsatz 100 herstellen. Statt dem Einlegen der einzelnen LEDs in die dafür vorgesehenen Aufnahmen kann der Reflektor 22, der gleichzeitig als Sockel für die LEDs 24 dient, mitsamt den LEDs als eine Einheit in die dafür vorgesehene Aufnahme 218a, 218 eingeschoben werden, wodurch eine weitere Verfahrensvereinfachung erreicht wird. Auch ein Lackieren oder Beschichten der Innenoberfläche des Blinkleuchten-Einsatzes kann damit entfallen.

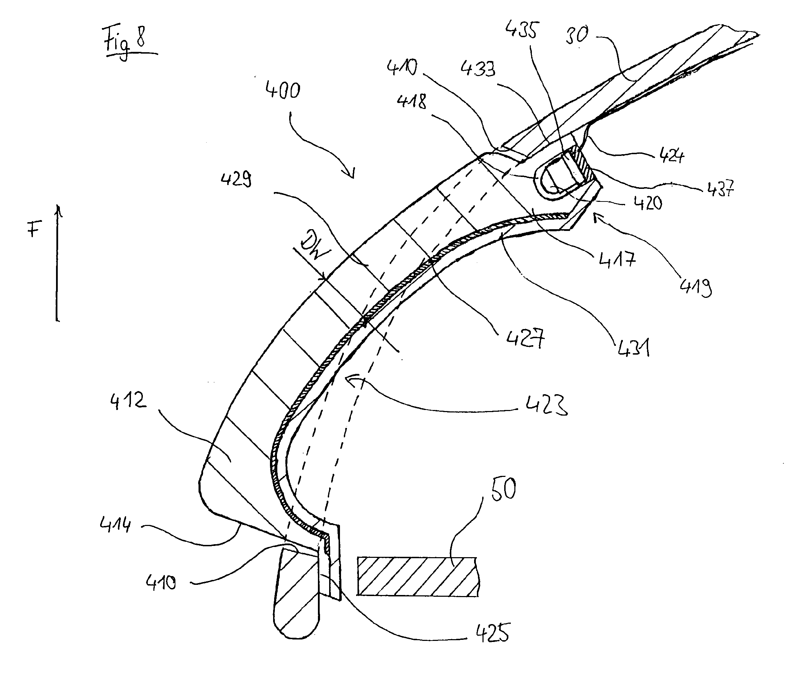

Die in Fig. 6 gezeigte Ausführungsform der Erfindung sitzt ein in Fahrtrichtung abstrahlendes, zusätzliches LED 21 in einer entsprechenden zusätzlichen Aufnahmebohrung 319, so dass auch eine in Fahrtrichtung F gerichtete Lichtabstrahlung erfolgt. Die Aufnahmebohrung 319 ist in die zur Fahrtrichtung F hin weisende Wandung der Aufnahme 318a eingebohrt, während in die heckseitige Wand der Aufnahme 318a zwei mit entgegen der Fahrtrichtung abstrahlenden LEDs 20 bestückte Aufnahmebohrungen 318 eingebohrt sind. Auf diese Weise erfolgt eine Signalabstrahlung auch in Fahrtrichtung auch dann, wenn als Ausgießmasse 328 eine lichtundurchlässiges oder stark reflektierendes Material verwendet wird, das die Lichtabstrahlung der beiden Leuchtdioden 20 in den entgegen der Fahrtrichtung liegenden Bereich fokussiert.

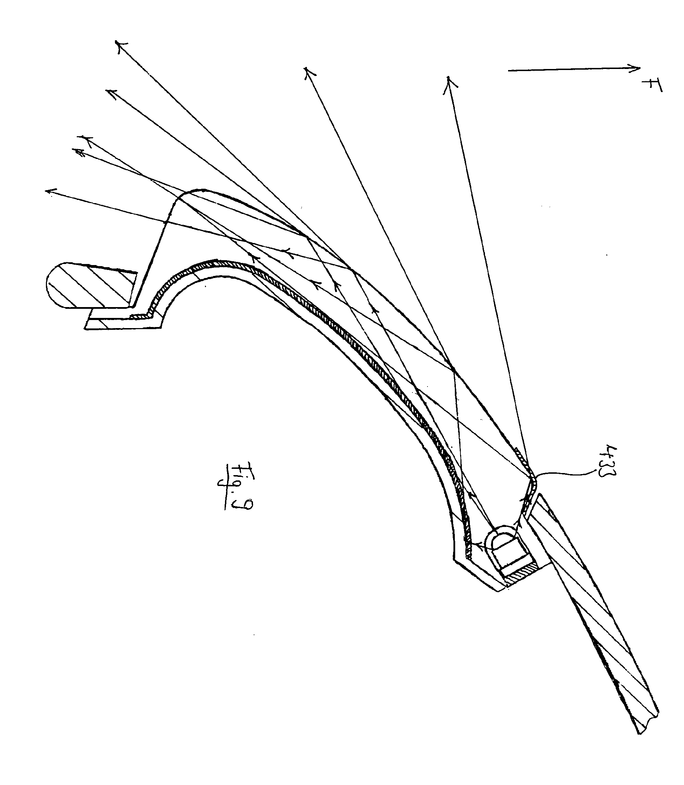

Im folgenden wird bezug genommen auf Fig. 7. Mit 30 ist dabei ein Standard-Seitenspiegelgehäuse des Fahrzeug-Seitenspiegels bezeichnet, das über eine Gehäusehalterung 16, bzw. eine Aufhängung 16 am Fahrzeug befestigt ist und ein Spiegelglas 50 einfasst. Auf der der Gehäusehalterung 16 abgewandten Seite des Spiegelgehäuses 30 (außenseitig) ist dabei ein Leuchtkörper-Einsatz 400 zu erkennen, der mit einer Leuchtfläche 414 über die Außenkontur des Spiegelgehäuses 400 übersteht und dem von oben nach unten gekrümmten Verlauf der Außenkontur des Spiegelgehäuses 400 folgt. Mit gestrichelter Linie ist dabei die Lage des Leuchtkörpereinsatzes 400 an der Rückseite des Seitenspiegels angedeutet. Ferner ist die Lage dreier übereinander angeordneter Leuchtdioden (LEDs) 420 angedeutet, von denen durch die Leuchtfläche 414 hindurch Licht abgestrahlt wird. Das Gehäuse des Standard-Seitenspiegels ist als eine durchgängige Halbschale gestaltet.

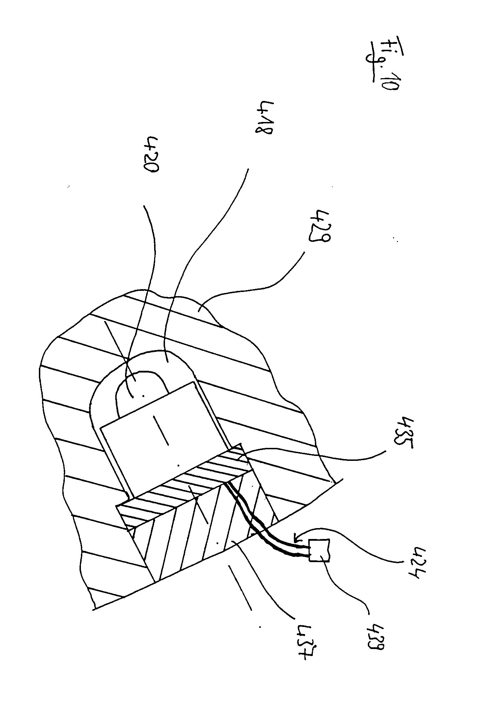

In Fig. 8 ist der Leuchtkörper-Einsatz 400 näher dargestellt. Der Leuchtkörper-Einsatz 400 ist im wesentlichen schalenförmig. An seinem dem Spiegelglas 50 (dem Fahrzeugheck) zugewandten Ende steht ein Klebeflansch 425 vor und an seinem der Fahrzeugfront zugewandten Ende ein Vorsprung bzw. eine Nase 419.

Über den Klebeflansch 425 und eine Flanschfläche 433 am Vorsprung 419 kann der Leuchtkörper-Einsatz 400 mit der Innenkontur des Spiegelgehäuses 30 verklebt werden.

Mit gestrichelter Linie ist dabei der Verlauf eingezeichnet, den das Standard-Gehäuse hätte, wenn der Leuchtkörper-Einsatz 400 nicht nachgerüstet worden wäre. Man erkennt, dass die Außenkontur des eingesetzten Leuchtkörper-Einsatzes 400 frontseitig ausgehend von der Radialkoordinate des Spiegelgehäuses entgegen der Fahrtrichtung F zunehmend bzw. kontinuierlich ansteigend von der Radialkoordinate der Außenkontur nach außen hervortritt, so dass die endseitige, im wesentlichen entgegen der Fahrtrichtung F weisende Leuchtfläche 414 gebildet wird. Andererseits steht die Innenkontur des Leuchtkörper-Einsatzes 400 in Fahrtrichtung F zunehmend bzw. kontinuierlich ansteigend nach innen über die Innenkontur des Gehäuses hervor und mündet in einen Vorsprung 419, der Platz zur Aufnahme der Leuchtdioden 420 bietet.

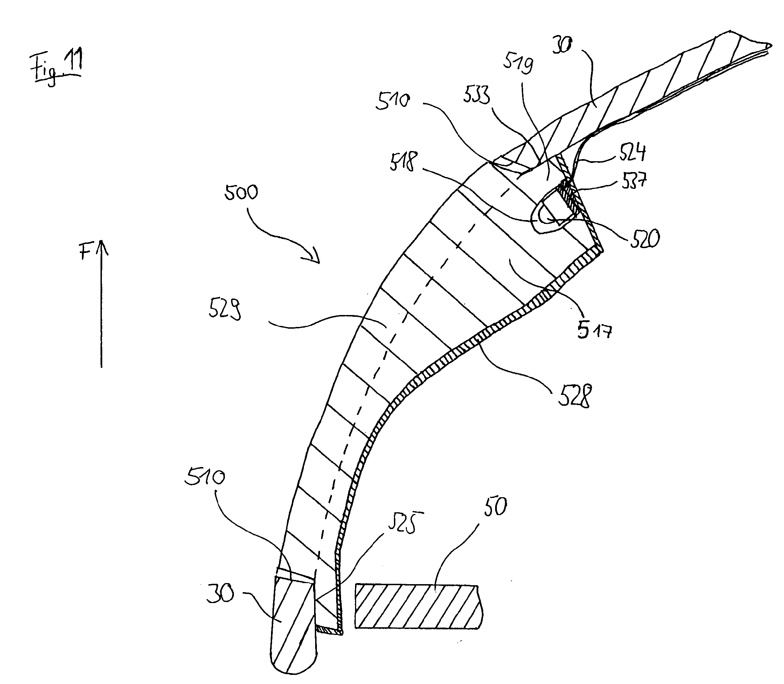

Die in Fig. 8 dargestellte Aufnahme einer der Leuchtdioden 420 im Vorsprung 419 ist dabei in Fig. 10 im Detail gezeigt.

Man erkennt eine der in den Vorsprung 419 eingebohrten Öffnungen 418, in die eine der lichtemitierenden Dioden 420 und deren Fassung, eine Leiterplatte 435 eingesteckt ist. Die Leiterplatte stützt sich dabei an einer Schulter der Öffnung 418 ab. Zudem wäre eine Verklebung der LEDs 420 oder der Leiterplatte 435 in der Öffnung 418 denkbar. Danach ist die Öffnung 418 mit einem Siegelmaterial 437, beispielsweise Kunstharz, wasserdicht versiegelt bzw. ausgegossen worden.

Eine Anschlussleitung 424 für die LEDs 420 ist aus dem Körper 419 herausgeführt und an der Innenkontur des Gehäuses 30 verlegt, vorzugsweise verklebt. Auch ein rückseitiger Stecker, wie in Fig. 10 mit 439 bezeichnet, wäre denkbar. Die Verkabelung 424 kann dabei fahrzeugseitig geeignete, nicht gezeigte Anschlüsse aufweisen, mit denen es beim Einbau des Leuchtkörper-Einsatzes 400 mit der Fahrzeugelektrik verbindbar ist. Je nach Typ des Fahrzeugs kann dabei beispielsweise vorgesehen sein, das Leiterband 424 durch den Spiegelgehäusefuß und die Fahrzeugtüre mit dem Blinksignalgeber zu verbinden oder einen bisher toten Anschluss im Spiegelgehäuse dafür zu verwenden.

Die Lichtleitung von den LEDs 420 zur Leuchtfläche 414 übernimmt dabei ein lichtführender Körper 429 des Leuchtkörper-Einsatzes 400, der aus einem möglichst transparenten Kunststoff, beispielsweise Polycarbonat oder Plexiglas (PMMA) gegossen ist. Bei Einsatz weißer oder nicht blinkersignalfarbener LEDs wäre auch ein eingefärbter Kunststoff denkbar.

Die Innenseite des lichtführenden Körpers 429 wird dabei über ihre ganze Länge von einem Reflektorteil 431 gegen den Gehäuseinnenraum abgeschirmt. Eine Lichtabstrahlung zum Gehäuseinnenraum hin und damit eine Beeinträchtigung des Fahrers wird damit verhindert.

Das Reflektorteil 431 kann dabei beispielsweise aus einem schwarzen Kunststoff bestehen, welcher auf der zum lichtführenden Körper 429 hinweisenden Seite verchromt, vorzugsweise bedampft ist. Das Reflektorteil 431 und der lichtführende Körper 429 liegen dabei lediglich im Bereich des Flansches 425 und des Vorsprungs 419 aneinander an.

Im Krümmungsbereich an der Ausnehmung 423 ist dagegen ein Luftspalt 427 zwischen dem Reflektorteil 431 und dem lichtführenden Körper 429 vorgesehen. Mit Hilfe der Lichtbrechung beim Eintritt des Lichts in den Luftspalt 427 gelingt es, einen größeren Teil der Abstrahlung in den gewünschten Winkelbereich, d.h. nach hinten zu lenken.

Die Innenkontur des Lichtleiterkörpers 429 und damit der Luftspalt 427 und das Reflektorteil 431, folgen der durch die Außenkontur des Leuchtkörper-Einsatzes 400 vorgegebenen, nach außen hin gewölbten Form über weite Strecken parallel, so dass sich in diesem Abschnitt eine konstante Wandstärke DW des lichtleitenden Materials 429 ergibt.

Der lichtführende Körper 429 mit der eingebohrten Öffnung 418, die LED-Leiterplatteneinheit 420, 435 und das Reflektorteil 431 sind dabei jeweils vorgefertigt und dann zu einer einstückigen Einheit zusammengesetzt und wasserdicht vergossen bzw. verklebt.

Es wird somit ein Leuchtkörper-Einsatz 400 geschaffen, der robust gegen Steinschlag und Spritzwasser ist und eine gute Lichtabstrahlung in den gewünschten Winkelbereich (ein gegen die Fahrzeuglängsachse entgegen der Fahrtrichtung um 30 - 85° nach außen geneigter Winkelbereich) gewährleistet.

Dazu ist in Fig. 9 der Strahlengang des von der LED 420 abgestrahlten Lichts skizziert. Man erkennt, dass sämtliche Lichtstrahlen in den gewünschten Winkelbereich gerichtet sind. Ein Teil des Streulichts wird aber auch in Fahrtrichtung ausgestrahlt, so dass das Blinksignal auch von entgegenkommenden Verkehrsteilnehmern wahrgenommen werden kann. Durch eine zusätzliche Reflexionsbeschichtung 433 im vorderen Abschnitt der Außenkontur des Einsatzes 400 kann der ausgeleuchtete Winkelbereich dabei noch weiter nach hinten eingeengt werden, bzw. die Leuchtstärke in diesem Winkelbereich erhöht werden.

Ein derartiger Effekt kann auch durch einen erhöhten Brechungsindex oder Reflexionsgrad an der Außenoberfläche im frontseiten Bereich der Außenkontur des Einsatzes 400 erzielt werden.

Schließlich zeigt Fig. 5 einen Leuchtköper-Einsatz 500, der die Gehäuseschale 30 volumenmmäßig vervollständigt und an einer Erhöhung 517 an seinem in Fahrtrichtung F weisendem Ende nach innen übersteht. An die Erhöhung 517 schließt eine Nase 519 an, in der die Leuchtdiode 520 aufgenommen und eingesiegelt ist. Trotz des Fehlens einer endseitigen Erhöhung, bzw. einer entgegen der Fahrtrichtung weisenden Leuchtfläche, kann das Licht in den gewünschten Winkelbereich abgestrahlt werden. Innenseitig ist der Luchtkörper-Einsatz 500 mit einer reflektierenden Schicht 528 bedampft.

Die Erfindung ist aber nicht auf die gezeigten Ausführungsformen beschränkt.

Insbesondere wäre es denkbar, neben Reflektoren hinter den LEDs die den Hauptteil des abgestrahlten Lichts schon in eine bestimmte Richtung lenken, zusätzlich die Innenoberfläche des Blinkleuchten-Einsatzes lichtundurchlässig, bzw. -reflektierend zu beschichten.

Bei den in den Figuren 5 und 6 gezeigten Ausführungsformen könnte durch eine zusätzliche, zumindest teilweise aufgetragene Verspiegelung der Aufnahmen 218a; 318a, beispielsweise in Form einer Lackschicht, eine zusätzliche Fokussierung der Lichtabstrahlung in die gewünschte Richtung erfolgen.

Selbstverständlich sind Abweichungen von den gezeigten Ausführungsformen möglich, ohne den Rahmen der Erfindung zu verlassen.

So erfolgt bei der in den Fig. 7 bis 10 dargestellten Ausfünrungsform die Befestigung des Blinkleuchten-Einsatzes 400 im Spiegelgehäuse 30 durch Einkleben. Ersatzweise oder zusätzlich können aber auch andere stoffschlüssige oder aber formschlüssige Verfahren eingesetzt werden, wie beispielsweise mit Schnapp-, Clips- oder Federnasenverschlüsse, einzuhängende Federn u.ä.

## Patentansprüche

1. Leuchtkörper-Einsatz (1; 100; 200; 300; 400; 500) zum nachträglichen Einbau in serienmäßige Standard-Fahrzeugseitenspiegel (2), der als Vollkörper ein Spiegelgehäuse (30; 130) eines Fahrzeugseitenspiegels (2) volumenmäßig vervollständigt und zur Außenseite hin abschließt, in der Form einer einstückigen Schale, die formschlüssig in eine nachträglich in einen durchgehenden Wandabschnitt des Spiegelgehäuses (30; 130) eingebrachte Aussparung (10; 410; 510) einsetzbar ist, und zumindest ein Leuchtmittel (20; 420; 520) aufweist.

2. Leuchtkörper-Einsatz (1; 100; 200; 300; 400) nach Anspruch 1, **dadurch gekennzeichnet, dass**
die Schale zu einer einer Gehäusehalterung (16) abgewandten Seite hin von der Außenkontur des Standard-Fahrzeugseitenspiegels (2) zunehmend vorspringt, so dass sie mit ihrer endseitigen Erhöhung (12; 412) eine im wesentlichen entgegen der Fahrtrichtung weisende Leuchtfläche (14; 114; 414) ausbildet.

3. Leuchtkörper-Einsatz (400; 500) nach Anspruch 1 oder 2, **dadurch gekennzeichnet, dass** die Schale zu einer einer Gehäusehalterung (16) zugewandten Seite hin von der Innenkontur des Spiegelgehäuses (30) zunehmend vorspringt und eine anfangsseitige Erhöhung (417; 517) bildet, in der das Leuchtmittel (420; 520) aufgenommen ist.

4. Leuchtkörper-Einsatz nach Anspruch 1 oder 3, **dadurch gekennzeichnet, dass** der Leuchtkörper-Einsatz eine mit der Außenkontur des Standard-Fahrzeugseitenspiegels (2) bündige Außenoberfläche hat und in das Spiegelgehäuse an einer Stelle eingesetzt ist, an die Außenkontur des Spiegelgehäuses (30) quer zur Fahrzeuglängsache konvex ausgewölbt ist.

5. Leuchtkörper-Einsatz (1; 100; 200; 300) nach einem der vorhergehenden Ansprüche, **dadurch gekennzeichnet, dass** die Leuchtfläche (114) auf einer entgegen der Fahrtrichtung weisenden Nase (13) ausgebildet ist, welche an die Erhöhung (12) anschließt.

6. Leuchtkörper-Einsatz (1; 100; 200; 300; 400; 500) nach einem der vorhergehenden Ansprüche, **dadurch gekennzeichnet, dass** das Leuchtmittel (20; 420; 520), vorzugsweise zumindest eine Leuchtdiode (20; 420; 520), aufweist und einen Träger (129; 229; 429; 529) mit einer lichtführenden Schicht aus lichtleitendem Material, vorzugsweise transparentem Kunststoff, vorgesehen ist.

7. Leuchtkörper-Einsatz (1; 100; 200; 300; 400) nach einem der vorhergehenden Ansprüche, **dadurch gekennzeichnet, dass** hinter der Leuchtfläche (14; 114; 414) zumindest eine Ausnehmung (118; 218, 218a) vorgesehen ist, in der die Leuchtdiode (20; 420) untergebracht ist.

8. Leuchtkörper-Einsatz (100; 300; 400; 500) nach einem der vorhergehenden Ansprüche, **dadurch gekennzeichnet, dass** an der lichtführenden Schicht (12, 13; 429; 529) innenseitig anschließend eine zumindest weitgehend lichtdichte, vorzugsweise reflektierende Abdichtung (126, 128; 326; 431; 528) vorgesehen ist.

9. Leuchtkörper-Einsatz (400) nach Anspruch 8, **dadurch gekennzeichnet, dass** am Übergang zwischen der lichtführenden Schicht (429) und der Abdichtung (431) eine Streuschicht (427) mit einem lichtleitenden Material geringerer Dichte, vorzugsweise Luft, vorgesehen ist.

10. Leuchtkörper-Einsatz (400; 500) nach einem der vorhergehenden Ansprüche, **dadurch gekennzeichnet, dass** an seinem in Fahrtrichtung (F) weisenden Ende ein Flansch (433; 533) parallel zur Innenkontur des Spiegelgehäuses (30) ausgebildet ist, über den der Leuchtkörper-Einsatz (400; 500) mit dem Spiegelgehäuse (30) verbindbar, vorzugsweise verklebbar ist.

11. Leuchtkörper-Einsatz (400; 500) nach einem der vorhergehenden Ansprüche, **dadurch gekennzeichnet, dass** an seinem entgegen der Fahrtrichtung (F) weisenden Ende ein Flansch (425; 525) parallel zur Innenkontur des Spiegelgehäuses (30) ausgebildet ist, über den der Leuchtkörper-Einsatz (400; 500) mit dem Spiegelgehäuse (30) verbindbar, vorzugsweise verklebbar ist.

12. Leuchtkörper-Einsatz (400) nach einem der vorhergehenden Ansprüche, **dadurch gekennzeichnet, dass** die Abdichtung (431) als ein vorzugsweise im Bereich der Flansche (425, 433) mit der lichtführenden Schicht (429) verbundenes, vorzugsweise verklebtes Bauteil (431) vorgesehen ist, welches den Leuchtkörper-Einsatz (400) innenseitig abschließt.

13. Leuchtkörper-Einsatz (1; 100; 200; 300; 400; 500) nach einem der vorhergehenden Ansprüche, **dadurch gekennzeichnet, dass** die elektrische Versorgung der Leuchtdiode (20; 420) über ein Leiterband (24; 424; 524) erfolgt, das mit der Innenseite des Spiegelgehäuses (30; 130) verklebbar ist.

14. Leuchtkörper-Einsatz (1; 100; 200; 300) nach einem der vorhergehenden Ansprüche, **dadurch gekennzeichnet, dass** federnde Nasen vorgesehen sind, über die der Leuchtkörper-Einsatz (1; 100; 200; 300) im Spiegelgehäuse (30; 130) befestigbar ist.

15. Leuchtkörper-Einsatz (1; 100; 200; 300) nach einem der Ansprüche 2 bis 14, **dadurch gekennzeichnet, dass** der Leuchtkörper-Einsatz (1; 100; 200; 300) das Spiegelgehäuse (30; 130) volumenmäßig vervollständigt und die Ausnehmung (118; 218, 218a) mit der Leuchtdiode im Bereich der endseitigen Erhöhung (12) angeordnet ist.

16. Leuchtkörper-Einsatz (100; 200; 300) nach Anspruch 15, **dadurch gekennzeichnet, dass** die Leuchtdiode (20) innenseitig am Leuchtkörper-Einsatz (100; 200; 300) angebracht ist.

17. Leuchtkörper-Einsatz (100; 200; 300) nach Anspruch 15 oder 16, **dadurch gekennzeichnet, dass** der Leuchtkörper-Einsatz (100; 200; 300) auf seiner Innenseite eine die Leuchtdiode (20) und elektrische Anschlüsse in die Ausnehmung (118; 218, 218a; 318) einsiegelnde Schicht (128; 228; 328) aufweist.

18. Leuchtkörper-Einsatz (200) nach einem der Ansprüche 15 bis 17, **dadurch gekennzeichnet, dass** die Leuchtdiode (20) vor einem Reflektor (22) angeordnet ist, der die Ausnehmung (218, 218a) des Leuchtkörper-Einsatzes (200) zur Innenseite der Spiegelgehäuses (130) hin abschließt.

19. Leuchtkörper-Einsatz (100; 300) nach einem der Ansprüche 15 bis 18, **dadurch gekennzeichnet, dass** die dem Innenraum des Spiegelgehäuses (130) zugewandte Oberfläche des Leuchtkörper-Einsatzes (100; 300) mit Ausnahme eines der Leuchtfläche (14; 114) zugewandten Teilbereichs der Ausnehmung mit einer reflektierenden Schicht (126; 326) versehen ist.

20. Leuchtkörper-Einsatz (400; 500) nach einem der Ansprüche 3 bis 14, **dadurch gekennzeichnet, dass** die anfangsseitige Erhöhung (417; 517) eine in Fahrtrichtung (F) vorstehende Nase (419) aufweist, in der das Leuchtmittel (420; 520) eingefasst ist.

21. Leuchtkörper-Einsatz (400; 500) nach Anspruch 20, **dadurch gekennzeichnet, dass** der Flansch (433) parallel zur Innenkontur des Spiegelgehäuses (30) an der in Fahrtrichtung (F) vorstehenden Nase (419) ausgebildet ist.

22. Leuchtkörper-Einsatz (400; 500) nach Anspruch 20 oder 21, **dadurch gekennzeichnet, dass** die Leuchtdiode (420) mit einer Leiterplatte (435) in einer Öffnung in der in Fahrtrichtung (F) vorstehenden Nase (419) eingegossen ist.

23. Leuchtkörper-Einsatz (400) nach einem der Ansprüche 3 bis 21, **dadurch gekennzeichnet, dass** die lichtführende Schicht (429) zumindest abschnittsweise zwischen der anfangsseitigen und der endseitigen Erhöhung (417, 412) eine weitgehend konstante Dicke (DW) aufweist.

24. Leuchtkörper-Einsatz (400) nach einem der Ansprüche 3 bis 23, **gekennzeichnet durch** eine innenseitige Ausnehmung (423) die dem Verlauf der lichtführenden Schicht (429) folgt.

25. Bausatz zum Nachrüsten eines serienmäßigen Standard-Fahrzeugseitenspiegels mit einem Blinkleuchtkörper, bestehend aus einem Leuchtkörper-Einsatz (1; 100, 200; 300; 400; 500) nach einem der Ansprüche 1 bis 24 und einem Standard-Seitenspiegelgehäuse (30), an dem eine Ausnehmung (10; 410; 510), vorzugsweise eine Freifräsung, vorgesehen ist, die der Randkontur des Leuchtkörper-Einsatzes (1; 100, 200; 300; 400; 500) mehrseitig folgt.

26. Bausatz nach Anspruch 25, **dadurch gekennzeichnet, dass** der Originalzustand des Standard-Seitenspiegelgehäuses (30) lediglich durch die Ausnehmung (10; 410; 510) verändert ist.

27. Verwendung eines Leuchtkörper-Einsatzes (1; 100; 200; 300; 400; 500) nach einem der Ansprüche 1 bis 24 zum Nachrüsten eines serienmäßigen Standard-Fahrzeugseitenspiegels mit einem Blinkleuchtkörper.

28. Verwendung eines Bausatzes nach Anspruch 25 oder 26 zum Nachrüsten eines serienmäßigen Standard-Fahrzeugseitenspiegels mit einem Blinkleuchtkörper.

29. Verfahren zum Nachrüsten serienmäßiger Seitenspiegel (2) bei gängigen Kfz-Typen, deren Gehäuse (30) nicht von vorne herein zur Aufnahme eines Blinklichts vorgesehen ist, zu Seitenspiegel-Blinker-Einheiten, mit den folgenden Schritten:
Einbringen, insbesondere Ausfräsen einer Aussparung (10; 410; 510) in einen durchgehenden Wandabschnitt eines Seitenspiegelgehäuses (30) eines serienmäßigen Standard-Fahrzeugseitenspiegels (2), und
Einsetzen und Befestigen eines Leuchtkörper-Einsatzes (1; 100; 200; 300; 400; 500), insbesondere nach einem der Ansprüche 1 bis 13, in der Aussparung (10; 410; 510) .

30. Verfahren nach Anspruch 29, **dadurch gekennzeichnet, dass** das vorhandene Standard-Seitenspiegelgehäuse am Fahrzeug durch das Standard-Seitenspiegelgehäuse (30) mit der eingebrachten Aussparung (10; 410; 510) ersetzt wird.

31. Verfahren nach Anspruch 29 oder 30, bei dem der Leuchtkörper-Einsatz (1; 100; 200; 300; 400; 500) anschließend elektrisch angeschlossen wird.
